# EUROPEAN PATENT APPLICATION

(11) **EP 4 769 168 A1**
(43) Date of publication of application: **01.07.2026**
(21) Application number: 24864474.2
(22) Date of filing: 30.08.2024
(51) Int. Cl.: G06F 15/78

(54) **AI PROCESSOR ACCELERATION METHOD AND SYSTEM, AND CHIP**

(30) Priority: 13.09.2023 CN 202311182204
(71) Applicant: ZTE CORPORATION, Shenzhen, Guangdong 518057 (CN)
(72) Inventor: YAO, Xiao, Shenzhen, Guangdong 518057 (CN)
(74) Representative: Ziebig Hengelhaupt Intellectual Property Attorneys Patentanwaltskanzlei PartGmbB
(86) International application number: PCT/CN2024/115861
(87) International publication number: WO 2025/055752

(57) **Abstract**

The present application discloses an AI processor acceleration method, an AI processor acceleration system, and a chip, belonging to the technical field of electronics. The technical solution of the AI processor acceleration method of the present application includes: determining the first operator in the target model that cannot be effectively accelerated after identifying a target model that cannot be effectively accelerated by the AI processor; and determining the target file corresponding to the first operator, and synchronizing the target file to the operator acceleration library of an eFPGA of the AI processor, to accelerate the first operator through the eFPGA.

## Description

### CROSS-REFERENCE TO RELATED APPLICATIONS

The present application claims priority to Chinese Patent Application No. 202311182204.7, filed on September 13, 2023, the entire contents of which are incorporated herein by reference.

### TECHNICAL FIELD

The present application relates to the technical field of electronics, and in particular to an artificial intelligence (AI) processor acceleration method, an AI processor acceleration system, and a chip.

### BACKGROUND

In recent years, deep learning has made significant progress in intelligent perception. In many areas, such as speech, image, and video processing, the efficiency and effectiveness of artificial intelligence processing have surpassed those of humans. With the rapid development of large-scale models in the past two years, artificial intelligence has also made significant progress in language understanding and processing.

Because deep learning algorithms are characterized by data independence and parallel computing capabilities, and because their computation is intensive, they are well-suited for hardware acceleration, which has spurred the rapid development of AI processors.

However, with the continuous emergence of new AI technologies and the rapid development of AI models and operators, the customized AI processors for digital subsystem for automation (DSA) are facing significant challenges. This manifests in their inability to effectively accelerate the execution of new models and operators, impacting lifespan and competitiveness of the AI processor. Furthermore, for models and operators that the AI processor cannot effectively handle or does not support, interaction with the central processing unit (CPU) is required, or execution may even be solely dependent on the CPU, resulting in extremely low efficiency and failing to meet the demands of scenarios with high real-time requirements. In other words, the low adaptability and energy efficiency of AI processors for new models and operators in AI technologies has become a pressing issue that needs to be addressed.

### SUMMARY

The main purpose of the present application is to provide an AI processor acceleration method and an AI processor acceleration system, and a chip, aiming to solve the technical problems of low adaptability and low processing energy efficiency of current AI processors.

To achieve the above purpose, the embodiment of the present application provides an AI processor acceleration method, including:
after identifying a target model that cannot be effectively accelerated the AI processor, determining a first operator in the target model that cannot be effectively accelerated; and
executing, via a microprocessor and an application-specific integrated circuit (ASIC) circuit of the AI processor, the first operator collaboratively.
determining a target file corresponding to the first operator, and synchronizing the target file to an operator acceleration library of an embedded field programmable gate array (eFPGA) of the AI processor, to accelerate the first operator through the eFPGA.

In addition, in order to achieve the above purpose, the embodiment of the present application further provides an AI processor acceleration system, including:
a compilation module, configured to identify a first operator in a target model that cannot be effectively accelerated after identifying the target model that cannot be effectively accelerated by the AI processor; and
an acceleration module, configured to determine a target file corresponding to the first operator and synchronize the target file to an operator acceleration library of an eFPGA of the AI processor, to accelerate the first operator through the eFPGA.

In addition, the embodiment of the present application further provides a chip, including: a memory, a processor, and an acceleration program stored in the memory and executable on the processor. The acceleration program is executed by the processor, the AI processor acceleration method as described above is implemented.

Furthermore, the embodiment of the present application also provides a computer-readable storage medium on which an AI processor acceleration program is stored. The AI processor acceleration program is executed by the processor, the AI processor acceleration method as described above is implemented.

### BRIEF DESCRIPTION OF THE DRAWINGS

To more clearly illustrate the technical solutions in the embodiments of the present application or in the related art, accompanying drawings used in the description of the embodiments or the related art will be briefly introduced below. Obviously, the accompanying drawings described below are only some embodiments of the present application. For those skilled in the art, other drawings can be obtained based on the structures shown in these drawings without creative effort.
FIG. 1 is a flow chart illustrating an AI processor acceleration method according to a first embodiment of the present application.
FIG. 2 is a flow chart illustrating the AI processor acceleration method according to a second embodiment of the present application.
FIG. 3 is a schematic structural diagram of the AI processor according to the first embodiment of the present application.
FIG. 4 is a schematic structural diagram of the AI processor according to the second embodiment of the present application.
FIG. 5 is a schematic structural diagram of the AI processor according to a third embodiment of the present application.
FIG. 6 is a flow chart illustrating the AI processor according to an embodiment of the present application.
FIG. 7 is a schematic diagram of functional modules of an AI processor acceleration system according to an embodiment of the present application.
FIG. 8 is a schematic diagram of a hardware structure of a chip involved in the embodiment of the present application.

The realization of the objectives, functional features, and advantages of the present application will be further explained with reference to the accompanying drawings and in conjunction with the embodiments.

### DETAILED DESCRIPTION OF THE EMBODIMENTS

It should be understood that the specific embodiments described herein are merely illustrative of the present application and are not intended to limit the present application.

The technical solutions in the embodiments of the present application will be clearly and completely described below with reference to the accompanying drawings. Obviously, the described embodiments are only some rather than all of the embodiments of the present application. Based on the embodiments of the present application, all other embodiments obtained by those skilled in the art without creative efforts are within the scope of the present application.

It should be noted that all directional indicators (such as up, down, left, right, front, back, etc.) in the embodiments of the present application are only used to explain the relative positional relationship and movement of each component in a certain specific posture (as shown in the figure). If the specific posture changes, the directional indicator will also change accordingly.

In the present application, unless otherwise explicitly stated or defined, terms "connected," "fixed," etc., should be interpreted broadly. For example, "fixed" can refer to a fixed connection, a detachable connection, or an integral connection; it can be a mechanical connection or an electrical connection; it can be a direct connection or an indirect connection through an intermediate medium; it can be an internal communication of two components or an interaction between two components, unless otherwise explicitly defined. Those skilled in the art can understand the specific meaning of the above terms in the present application according to the specific circumstances.

Furthermore, descriptions such as "first," "second," of the present application is for descriptive purposes only and should not be construed as indicating or implying their relative importance or implicitly specifying the number of technical features indicated. Therefore, a feature defined as "first" or "second" may explicitly or implicitly include at least one of those features. Furthermore, the technical solutions in the various embodiments can be combined with each other, but this must be based on what those skilled in the art can implement. If the combination of technical solutions is contradictory or impossible to implement, such a combination of technical solutions should be considered non-existent and is not within the scope of the present application.

Because deep learning algorithms are characterized by data independence and parallel computing capabilities, and because their computation is intensive, they are well-suited for hardware acceleration, which has spurred the rapid development of AI processors.

However, with the continuous emergence of new AI technologies and the rapid development of AI models and operators, the customized AI processors for DSA are facing significant challenges. This manifests in their inability to effectively accelerate the execution of new models and operators, impacting the lifespan and competitiveness of the processor. Furthermore, for models and operators that the AI processor cannot effectively handle or does not support, interaction with the CPU is required, or execution may even be solely dependent on the CPU, resulting in extremely low efficiency and failing to meet the demands of scenarios with high real-time requirements. In other words, the low adaptability and energy efficiency of AI processors for new models and operators in AI technologies has become a pressing issue that needs to be addressed.

To improve the competitiveness of AI processors, relevant technologies integrate multiple multi-core microprocessors within the AI processor. However, new operators that cannot be handled by the AI processor are implemented using these microprocessors, resulting in extremely low efficiency. Furthermore, integrating multiple microprocessors leads to higher costs for the AI processor. In some cases, processing even requires the host CPU outside the AI processor, necessitating extensive interaction between the AI processor and the host, resulting in very low efficiency.

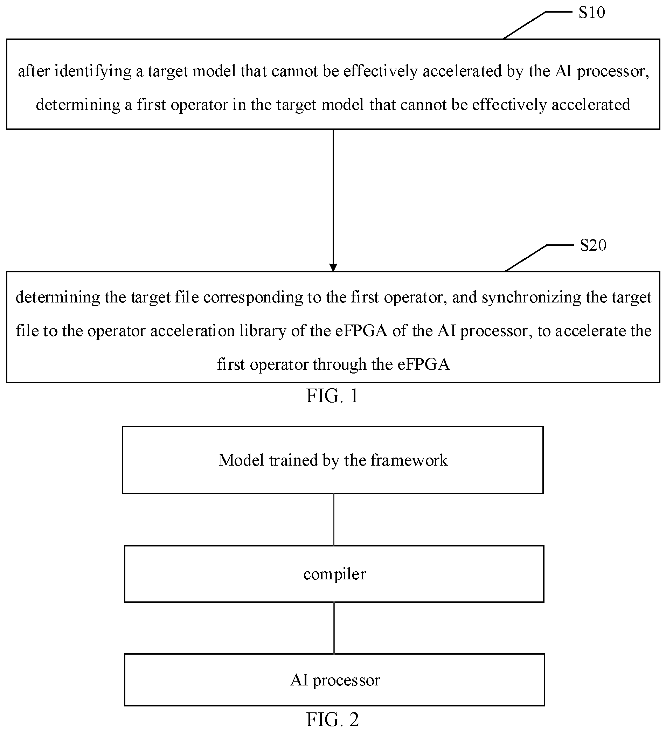

Based on this, the present application provides an AI processor acceleration method. Referring to FIG. 1, FIG. 1 is a flow chart illustrating the AI processor acceleration method according to an embodiment of the present application. In this embodiment, the AI processor acceleration method includes:
Step S10, after identifying a target model that cannot be effectively accelerated by the AI processor, determining a first operator in the target model that cannot be effectively accelerated.

As those skilled in the art will recognize, the AI processor is an integrated circuit chip specifically designed for artificial intelligence applications. It can accelerate the computation and processing of artificial intelligence algorithms at the hardware level, improving the efficiency and performance of these algorithms. The AI processor typically includes multiple core components such as processors, memory, and accelerators, and can realize various artificial intelligence applications such as image recognition, natural language processing, speech recognition, machine translation, or autonomous driving.

In this embodiment, the target model refers to a model that the AI processor cannot effectively accelerate. It can be understood that the model to be deployed by a user can be automatically deployed to the AI processor for acceleration after being compiled. This model to be deployed by the user can be a model trained using frameworks such as Tensorflow/Caffe/PyTorch/PPPaddlePaddle. The various processing engines of the AI processor (which may include engines with eFPGA, microprocessor, and ASIC circuits) execute asynchronously and in parallel under the control of compilation instructions to accelerate the entire model, as shown in FIG. 2. When the various processing engines of the AI processor cannot effectively accelerate the model to be deployed by the user, the model is determined to be a target model that the AI processor cannot effectively accelerate.

In an embodiment, if the engine resource utilization of the AI processor is less than a preset threshold during the acceleration of a model to be deployed by a user, the model is identified as a target model that cannot be effectively accelerated. In another embodiment, if the processing engines of the AI processor fail to complete the acceleration of the model to be deployed by the user within a predetermined time, the model is identified as a target model that cannot be effectively accelerated. In yet another embodiment, the target model that cannot be effectively accelerated may be a manually labeled model. The system can identify whether the current model is a target model that the AI processor cannot effectively accelerate by determining whether the model carries the manually labeled identification information. This embodiment does not impose specific limitations on this.

For example, the step of determining the first operator in the target model that cannot be effectively accelerated includes:
step A10, parsing, via the compiler, the target model to obtain a plurality of operators to be accelerated; and
step A20, from the plurality of operators to be accelerated, determining the operator that cannot be effectively executed on the engine resources of the AI processor, and designating the operator as the first operator that cannot be effectively accelerated in the target model.

In an embodiment, during the acceleration process of the operator to be accelerated, if the utilization rate of the engine resources of the AI processor is less than a preset threshold, the operator to be accelerated is identified as unable to run effectively on the engine resources of the AI processor; that is, the operator to be accelerated is the first operator that cannot be effectively accelerated. In another embodiment, if each processing engine of the AI processor fails to complete the acceleration of the operator to be accelerated within a predetermined time, the operator to be accelerated is identified as unable to run effectively on the engine resources of the AI processor; that is, the operator to be accelerated is the first operator that cannot be effectively accelerated. In yet another embodiment, the operator to be accelerated that cannot be effectively accelerated may be a manually labeled operator. The system can identify whether the operator to be accelerated cannot run effectively on the engine resources of the AI processor (i.e., determine whether the operator to be accelerated is the first operator that cannot be effectively run by the AI processor) by determining whether the operator to be accelerated carries the manually labeled information. This embodiment does not impose specific limitations on this.

The AI processor can be made into peripheral component interconnect express (PCIe, a high-speed serial computer expansion bus standard) cards and plugged into servers, which can then be used as AI servers. The server can accommodate multiple PCIe cards containing AI processors, enhancing processing capabilities of the AI processors. The AI servers can be cascaded to form AI server clusters, meeting the needs of various applications in cloud and edge computing scenarios.

In this embodiment, the target model is parsed by the compiler to obtain multiple operators to be accelerated. Then, based on the operators that cannot run effectively on the engine resources of the AI processor, the first operator that cannot be effectively accelerated in the target model can be accurately obtained.

Step S20, determining the target file corresponding to the first operator, and synchronizing the target file to the operator acceleration library of the eFPGA of the AI processor, to accelerate the first operator through the eFPGA.

In this embodiment, by synchronizing the target file corresponding to the first operator to the operator acceleration library of the eFPGA of the AI processor, the eFPGA can subsequently accelerate the first operator by loading the target file from the operator acceleration library.

Accelerating the first operator using an eFPGA can be categorized into four scenarios. The first scenario involves collaborative execution of the first operator using both an eFPGA (Embedded FPGA) and ASIC circuit. The second scenario involves collaborative execution of the first operator using both an eFPGA and a microprocessor. The third scenario involves collaborative execution of the first operator using an eFPGA, a microprocessor, and ASIC circuitry. The fourth scenario involves execution of the first operator solely using an eFPGA.

The embodiments of the present application disclose an AI processor acceleration method and an AI processor acceleration system, and a chip. In the AI processor acceleration method, after identifying the target model that cannot be effectively accelerated by the AI processor, the first operator that cannot be effectively accelerated in the target model is determined, the target file corresponding to the first operator is then determined, and the target file is synchronized to the operator acceleration library of the eFPGA (Embedded FPGA) of the AI processor, to accelerate the first operator by the eFPGA, thereby using the eFPGA to accelerate the operators that cannot be effectively processed by microprocessors and ASIC circuits. This effectively solves the problems of AI processors' adaptability to new AI technologies, models, and operators, as well as their low processing energy efficiency, thereby improving the market lifespan and competitiveness of the AI processors.

In an embodiment, after step S10, determining the first operator in the target model that cannot be effectively accelerated, the method further includes:
step B10, executing, via the microprocessor and the ASIC circuit of the AI processor, the first operator collaboratively.

As will be understood by those skilled in the art, ASIC circuits refer to a type of integrated circuit that is designed for a specific application area or for the specific requirements of a particular customer, as opposed to general-purpose integrated circuits.

In this embodiment, the collaborative execution of the first operator by the microprocessor and the ASIC circuit of the AI processor means that, through a preset scheduling algorithm, the engine resource space of the microprocessor and the ASIC circuit is comprehensively considered, and the first operator is scheduled to run on the microprocessor and/or ASIC circuit. For example, the compiler, through a preset scheduling algorithm and considering the respective engine resource spaces of the microprocessor and ASIC circuit, allocates the first operator to the microprocessor for execution (when using the microprocessor alone is more efficient than using the microprocessor and/or ASIC circuit, for example, when the engine resource space of the ASIC circuit is insufficient), or allocates the first operator to the ASIC circuit for execution (when using the ASIC circuit alone is more efficient than using the ASIC circuit and/or microprocessor, for example, when the engine resource space of the microprocessor is insufficient), or allocates the first operator to the ASIC circuit and microprocessor for joint execution (when the performance of collaborative execution by the ASIC circuit and microprocessor is better than using the ASIC circuit or microprocessor alone, for example, when both the ASIC circuit and microprocessor have a certain amount of engine resource space, and joint processing can maximize the processing efficiency of the first operator).

For the operator that cannot be effectively accelerated by the microprocessor and dedicated ASIC circuits of the AI processor, and for which there is no corresponding target file in the operator acceleration library (i.e., the operator is the first operator), in order not to affect the user experience, the embodiments of the present application first execute the first operator collaboratively via the microprocessor and the ASIC circuits of the AI processor, even if the acceleration performance is not optimal. Then, the target file corresponding to the first operator is determined and synchronized to the eFPGA of the AI processor. A form of the first operator is automatically notified to a backend via a compiler, and the backend can implement the first operator in the eFPGA using programmable logic. The target file is added to the operator acceleration library, thereby upgrading the eFPGA program through online upgrade to optimize the processing performance of the AI processor for the new operator, providing optimal performance in a way that minimizes the impact on the user, and further improving the adaptability and processing efficiency of the AI processor to new AI technologies, models, and operators.

For example, the method further includes:
step C10, after identifying a network model that can be effectively accelerated by the AI processor, executing, via the microprocessor, the ASIC circuit, and the eFPGA of the AI processor, all the operators of the network model collaboratively.

In this embodiment, the collaborative execution of the first operator by the microprocessor, ASIC circuit and eFPGA of the AI processor means that, by using a preset scheduling algorithm, taking into account the engine resource space of the microprocessor, ASIC circuit and eFPGA, the first operator is scheduled to run on at least one of the microprocessor, ASIC circuit and eFPGA.

In this embodiment, the network model refers to a model that can be effectively accelerated by the AI processor. It can be understood that the model to be deployed by the user can be automatically deployed to the AI processor for acceleration after being compiled. The model to be deployed by the user can be a model trained based on frameworks such as Tensorflow/Caffe/PyTorch/PPPaddlePaddle, as shown in FIG. 2. The various processing engines of the AI processor (which may include engines from eFPGA, microprocessors, and ASIC circuits) execute asynchronously and in parallel under the control of compilation instructions, completing the acceleration of the entire model. If the model to be deployed by the user can be effectively accelerated by the various processing engines of the AI processor, the model to be deployed by the user is determined to be a network model that can be effectively accelerated by the AI processor.

This embodiment, after identifying a network model that can be effectively accelerated by the AI processor, utilizes the microprocessor, ASIC circuitry, and eFPGA of the AI processor to collaboratively execute all operators of the network model. This allows for full utilization of all the engine resources of the AI processor to accelerate the model to be deployed, improve computational efficiency, enhance the computing power of the AI processor, enable the AI processor to adapt to different scenarios and AI algorithms, improve its flexibility and ultimately enhance the adaptability and processing efficiency of the AI processor in response to new AI technologies, models, and operators.

In an embodiment, after parsing, via the compiler, the target model to obtain a plurality of operators to be accelerated, the method further includes:
step D10, mapping, via the compiler, each operator to be accelerated to engine resources within the AI processor for execution based on the engine resources and a preset scheduling algorithm.

In this embodiment, the preset scheduling algorithm has been extensively studied by those skilled in the art and will not be elaborated further. Furthermore, this embodiment does not specifically limit the type of the preset scheduling algorithm, as long as it can map the model operators to be deployed to the engine resources in the AI processor for execution.

Step D20, using the operator to be accelerated that does not include the eFPGA engine in the mapped engine resources as the second operator, and identifying whether the second operator can be effectively accelerated by the microprocessor and/or ASIC circuit of the AI processor.

As those skilled in the art will understand, when a compiler executes a model operator to be deployed based on the engine resources in the AI processor, it determines which engine resource can effectively accelerate the operator (i.e., the model operator). This includes, for example, which of the following: eFPGA, microprocessor, and ASIC circuits, or which combination of two of these can effectively accelerate the operator. When it is determined that an eFPGA can effectively accelerate a certain model operator A, that model operator A will be preferentially assigned to the eFPGA for execution. For example, if it is determined that an eFPGA cannot effectively accelerate a certain model operator B, then the model operator B is generally not given priority to be effectively accelerated by the eFPGA engine. That is, the engine resources mapped to the model operator B often do not include the eFPGA engine. If the engine resources mapped to the model operator B do not include the eFPGA engine, the model operator B is the "second operator" mentioned above. At this time, it is determined whether the second operator can be effectively accelerated by the microprocessor and/or ASIC circuit.

Step D30, if it is determined that the second operator cannot be effectively accelerated, determining the second operator to be an operator that cannot be effectively run on the engine resources of the AI processor among the operators to be accelerated.

In this embodiment, if it is determined that the second operator cannot be effectively accelerated by the microprocessor and/or ASIC circuit, it means that the second operator cannot be effectively accelerated by all the engine resources of the AI processor. At this time, the second operator is the one that cannot run effectively on the engine resources of the AI processor.

This embodiment uses a compiler to map operators to engine resources in the AI processor for execution based on engine resources and a preset scheduling algorithm. The operator that does not include the eFPGA engine in the mapped engine resources are designated as second operators. Then, it is determined whether the second operator can be effectively accelerated by the microprocessor and/or ASIC circuit. If it is determined that the second operator cannot be effectively accelerated, the second operator is designated as the one that cannot be effectively run on the engine resources of the AI processor. This facilitates further accurate identification of the first operator that cannot be effectively accelerated in the target model.

In an embodiment, the engine resources include the engine of the eFPGA, the microprocessor, and the ASIC circuit. The step of mapping, via the compiler, each operator to be accelerated to the engine resources for execution based on the engine resources in the AI processor and in conjunction with a preset scheduling algorithm includes:
step E10, identifying, via the compiler, the engine resources in the AI processor to determine whether the engine of the ASIC circuit is capable of accelerating each operator to be accelerated;
step E20, using the operator to be accelerated that cannot be accelerated by the engine of the ASIC circuit as the third operator, and determining whether the engine of the eFPGA is capable of accelerating the third operator; and
step E30, mapping the third operator that cannot be accelerated by the engine of the eFPGA, to the engines of the microprocessor and the ASIC circuit for collaborative execution using a preset scheduling algorithm.

The engine resources in the AI processor include the engine of the eFPGA (the engine of the eFPGA is the one mentioned above), the engine of the microprocessor, and the engine of the ASIC circuit.

In this embodiment, if an operator to be accelerated can be effectively accelerated by an ASIC circuit, it will be accelerated by an ASIC circuit first. For the remaining operators, it is necessary to determine whether the eFPGA engine resources (operator acceleration library) can accelerate them. The remaining operators that cannot be accelerated by the engine of the eFPGA are the second operators.

In this embodiment, if it is necessary to accelerate a certain operator C through the engine of the eFPGA, the operator acceleration library of the eFPGA needs to store the target file corresponding to the operator C. For ease of description, the target file corresponding to the operator C is referred to as target file c. Then, the engine of the eFPGA can accelerate the operator C by loading the target file c from the operator acceleration library. In addition, a special case needs to be considered: even if the target file c exists in the operator acceleration library, if the resource space of the engine of the eFPGA is fully occupied and there are insufficient engine resources (i.e., computing power of eFPGA) to load the target file c from the operator acceleration library to accelerate operator C, effective acceleration of operator C still cannot be achieved. Therefore, in this embodiment, the operator acceleration library of the eFPGA is identified through the compiler (i.e., identifying whether the corresponding target file exists in the operator acceleration library of the eFPGA), and the engine of the eFPGA is also combined to identify whether the engine of the eFPGA can accelerate each operator (i.e., this also comprehensively considers whether the computing power resources of the engine of the eFPGA are sufficient), thereby improving the accuracy of identifying whether the current model operator can be accelerated by the engine of the eFPGA.

In an embodiment, after synchronizing the target file to the operator acceleration library of the eFPGA of the AI processor, the method further includes:
step F10, sending a notification message to the compiler, where the notification message is used to trigger the compiler to identify the engine resources in the AI processor.

In this embodiment, after the target file is added to the operator acceleration library (i.e., after the eFPGA program is upgraded), the engine of the eFPGA then has the ability to execute the first operator (the target file added to the operator acceleration library is the target file corresponding to the first operator), or in other words, the eFPGA has the ability to accelerate the first operator. At this point, after synchronizing the target file to the operator acceleration library of eFPGA in the AI processor, this embodiment also sends a notification to the compiler. The compiler responds to this notification and re-executes the step of identifying the operator acceleration library of eFPGA through the compiler, so that the compiler can perform re-identification and identify that the target file corresponding to the first operator exists in the operator acceleration library of eFPGA, i.e., identifying that eFPGA has the ability to accelerate the first operator. At this time, the operator acceleration logic has been changed from the original "collaborative execution of the first operator through the microprocessor and ASIC circuit of the AI processor" to "collaborative execution through the engines of the microprocessor, ASIC circuit and eFPGA." Because the engine of eFPGA has been added for acceleration, this embodiment fully utilizes all the engine resources of the AI processor to accelerate the model to be deployed, improving computational efficiency and enhancing the computing power of the AI processor. This embodiment upgrades the eFPGA program online, optimizing the AI processor's performance for new operators and providing optimal performance with minimal impact on users. This improves the AI processor's adaptability and processing efficiency in response to new AI technologies, models, and operators.

In this embodiment, after synchronizing the circuit acceleration library in the eFPGA, the compiler is notified that the processing engine resources of the AI processor can be re-evaluated. The eFPGA reloads the appropriate circuits through online download, and the compiler redistributes the tasks processed by each processing engine to optimize performance and improve the robustness of the AI processor.

In an embodiment, determining the target file corresponding to the first operator includes:
step G10, outputting information of the first operator as a prompt;
step G20, obtaining the acceleration unit execution file corresponding to the first operator input based on the output prompt, where the acceleration unit execution file is executable by the eFPGA; and
step G30, using the acceleration unit execution file as the target file corresponding to the first operator.

In this embodiment, information about the first operator is output as a prompt, automatically notifying the backend (i.e., the engineers) of the form of the first operator. This allows the backend to implement the first operator on the eFPGA using programmable logic. Then, by obtaining the acceleration unit execution file corresponding to the first operator input based on the output prompt (this acceleration unit execution file is created by the backend based on the form of the first operator), where this acceleration unit execution file is executable by the eFPGA, and then the acceleration unit execution file is used as the target file corresponding to the first operator. This facilitates the addition of the target file to the operator acceleration library, effectively enabling online upgrades of the eFPGA program and ensuring optimal processing performance of the AI processor for the new operator.

To facilitate the understanding of the technical concept or technical principle of the embodiments of the present application, an embodiment is illustrated as follows.

This embodiment provides an AI processor that internally contains a microprocessor (ARM, RISC-V, or self-developed), a dedicated ASIC circuit, and an eFPGA. The microprocessor, ASIC circuit, and eFPGA are organically connected via internal buses such as NOC, AXI4, and AHB. The eFPGA is used to accelerate operators that cannot be effectively processed by the microprocessor and ASIC circuit, effectively solving the problems of adaptability and energy efficiency in dealing with new AI technologies, models, and operators, and improving the market lifespan and competitiveness of the AI processor.

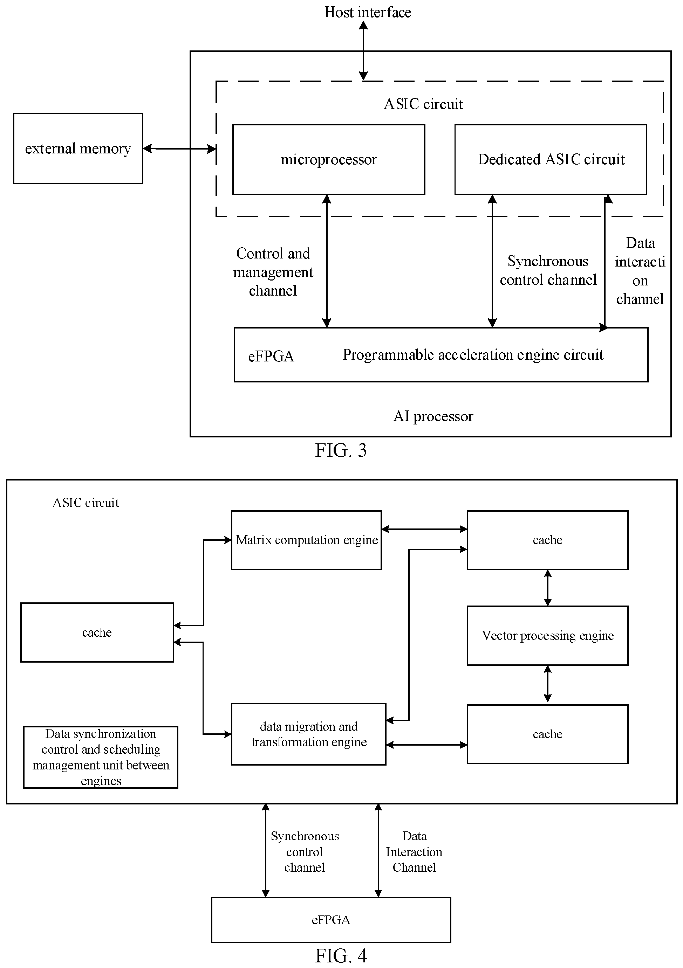

FIG. 3 shows the connection diagram between the ASIC circuit and the eFPGA. The control and management channel connecting the microprocessor to the eFPGA in the ASIC circuit is responsible for loading, updating, and resetting the target program on the eFPGA. The dedicated ASIC circuit and the eFPGA have a synchronous control channel and a data interaction channel. The synchronous control channel is responsible for transmitting synchronous information for collaborative processing between the microprocessor, the dedicated ASIC circuit, and the eFPGA, while the data interaction channel is responsible for transmitting collaborative data between the microprocessor, the dedicated ASIC circuit, and the eFPGA.

FIG. 4 shows the connection diagram between the dedicated ASIC circuit and the eFPGA. The dedicated ASIC circuit includes high-efficiency processing units customized for AI computing, such as matrix calculation engines, vector processing engines, and data transfer and transformation engines. The engines exchange data through buffers, and the computation is driven by data flow. The dedicated ASIC circuit and the eFPGA have a synchronization control channel and a data interaction channel. The synchronization control channel is responsible for transmitting synchronization information for collaborative processing between the microprocessor, the dedicated ASIC circuit, and the eFPGA, while the data interaction channel is responsible for transmitting collaborative data between the microprocessor, the dedicated ASIC circuit, and the eFPGA.

The microprocessor can be composed of ARM, RISC-V or a self-developed microarchitecture. The ASIC circuit includes a tensor engine, a vector engine, and a data switching engine. The microprocessor is used for instruction distribution and control, the tensor engine is used to process matrix (tensor) operations, the vector engine is used to process vector operations, and the main function of the data switching engine is to transform and convert data and to achieve efficient data transfer between multiple buffers, as well as between buffers and DDR/HBM.

The matrix (tensor) calculation engine, the vector calculation engine, the data transfer and transformation engine, and the eFPGA processing unit need to receive instructions distributed by the microprocessor engine to complete various predefined instruction operations. The microprocessor provides target file update channels and control channels for the eFPGA, can perform reset control on the eFPGA or ASIC circuit, and can also process special complex calculations that the ASIC circuit and the eFPGA cannot handle.

The ASIC circuit internally employs multiple parallel acceleration engines: a matrix (tensor) computation engine, a vector computation engine, and a data transfer and transformation engine. The matrix (tensor) computation engine retrieves activation and weight data from the Feature Buffer and Weight Buffer respectively, performs matrix multiplication, and stores the results in the Middle Buffer for partial summation or output. The vector computation engine handles processing steps other than convolution, including max pooling, average pooling, ReLU, PreLU, normalization, scaling, and quantization.

eFPGA is used to accelerate operators that cannot be efficiently processed by microprocessors and ASIC circuits. The goal of the eFPGA circuit acceleration is to address operator units in models such as CNNs, RNNs, and Transformers that cannot be effectively processed by microprocessors and ASIC circuits. By classifying and abstracting these operator units, these abstracted operators are implemented using eFPGA, generating multiple target files, which are then placed in an operator acceleration library. Based on the actual deployment model, the corresponding operator target file is loaded into the eFPGA for acceleration.

The acceleration library file of eFPGA can be stored on a server and be transferred to the Double Data Rate (DDR)/High Bandwidth Memory (HBM) memory of the AI processor via the PCIe interface (i.e., bus interface). The microprocessor reads the target file from the DDR/HBM and loads the target file into the eFPGA by simulating the JTAG (Joint Test Action Group) interface timing through the General-Purpose Input/Output Ports (GPIO) interface. As needed, the microprocessor can perform reset control on the eFPGA through a reset control channel. Internally, the eFPGA has an Operator Cmd Queue to store instructions for acceleration operators implemented using the eFPGA, and a Data Buffer to store the data to be processed by the Operator_1 Function...Operator_n Function acceleration units, as well as the results returned after processing. Operator_1 Function ......Operator_n Function can be cascaded to implement more complex operators. Operator_1 Function ......Operator_n Function can be updated online to other functional operators according to the current acceleration requirements of the model. The data buffer can be configured as multiple ping-pong buffers as needed to reduce buffer access conflicts.

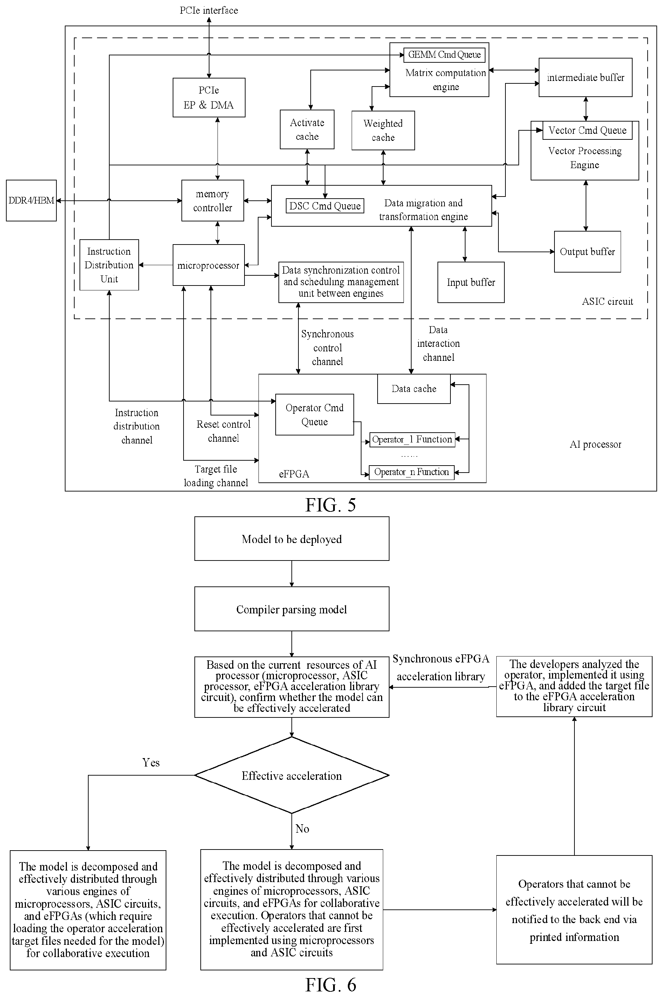

The block diagram of the AI processor is shown in FIG. 5. The microprocessor, eFPGA, and different processing engines exchange data through buffers, and drive computation through data flow to improve operating efficiency.

In this embodiment, the loading and reset of the eFPGA are controlled by a microprocessor. The various acceleration engines (matrix / tensor processing engine, vector processor, and scalar processor) in the eFPGA acceleration circuit and the ASIC circuit exchange data and work together through a ping-pong buffer. The compiler breaks down the model into micro-units that these processing engines can process, and the microprocessor distributes these units to the respective processing engines for efficient collaborative processing.

Given the rapid emergence of new AI technologies, models, and operators, for new operators that cannot be effectively accelerated, the low processing efficiency of DSA (Domain Specific Architecture) customized AI chips can be effectively addressed by continuously designing and implementing new operator circuits, generating target files, and synchronizing them into an acceleration library.

In this embodiment, for operators that cannot be effectively processed by microprocessors and ASIC circuits, an eFPGA (embedded programmable logic device) is used to create acceleration modules, generate target files, and integrate these operator acceleration modules into an operator acceleration library.

For the model processed by the AI processor, the compiler first parses the model to identify the operators requiring acceleration, and determine whether the current AI processor resources can effectively process the model. These resources include the operator acceleration library corresponding to the microprocessor, the ASIC circuit, and the eFPGA. If the model can be processed effectively, the target file corresponding to the operator module is loaded into the eFPGA, allowing the microprocessor, ASIC circuits, and eFPGA to work together efficiently for model training or inference tasks. Otherwise, the compiler indicates the operators that cannot be effectively processed by the current resources. The corresponding operators can be added through design and implemented using eFPGA resources. After design completion, the target file is generated and synchronized to the operator acceleration library. Subsequent processing involving that operator can then directly load the operator target file for effective acceleration.

For subsequent new AI technologies, models, and operators that cannot be effectively accelerated, eFPGA resources can be used to accelerate them, and the resulting target files can be placed in the operator acceleration library. Because eFPGA is programmable, these operators implemented using eFPGA can be iterated, optimized, and upgraded in the future.

For equipment used in the field, the operator parsed by the compiler from the user model is a target file that cannot be effectively accelerated by microprocessors and dedicated ASIC circuits, and for which there is no corresponding operator acceleration library. To avoid impacting users, the compiler first considers accelerating the operator using the engine in the microprocessor and dedicated ASIC circuit (even if the performance is not optimal). Then, it notifies the backend that the operator cannot be effectively accelerated, and the backend can implement the operator in an eFPGA using programmable logic, add the target file to the acceleration library, and upgrade the eFPGA program online to optimize the processing performance of the operator, providing optimal performance with minimal impact on users.

This embodiment addresses the adaptability and energy efficiency issues of DSA-customized AI chips in dealing with new AI technologies, models, and operators, and proposes an AI processor containing a microprocessor (ARM, RISC-V, or self-developed), dedicated ASIC circuitry, and an eFPGA. These components are organically connected via internal buses such as NOC, AXI4, and AHB. The eFPGA is used to accelerate operators that the microprocessor and ASIC circuitry cannot effectively handle. By classifying and abstracting new AI technologies, models, and operators, and implementing abstracted new operators using circuitry, it is loaded into eFPGA. This effectively solves the adaptability and energy efficiency problems of DSA-customized AI chips in dealing with new AI technologies, models, and operators, thereby improving the market lifespan and competitiveness of the AI processor.

While the above embodiments illustrate many details, they are only used to help understand the technical concept or technical principle of the embodiments of the present application, and do not constitute a limitation on the present application. Any simple modifications based on this technical concept should be within the scope of the present application.

In an embodiment, the method further includes:
step H10, if it is determined that there are a plurality of first operators in the target model and the engine of the eFPGA cannot execute each first operator at the same time, determine the priority of each first operator; and
step H20, filling each of the first operators into the resource space of the eFPGA engine for execution according to the priority of each first operator from high to low, and executing, via the engines of the microprocessor, the ASIC circuit and the eFPGA of the AI processor, the remaining first operators collaboratively after the resource space is filled.

For example, the determining the priority of each of the first operators includes:
step I10, identifying impact weights of each of the first operators on the task processing performance of the network model; and
step I20, determining the priority of each of the first operators according to the impact weights, where the greater the impact weight of task processing performance, the higher the priority.

In this embodiment, if the compiler parses a plurality of operators that cannot be effectively processed in the model of the AI processor, these operators are prioritized. The operator having the greatest impact on overall performance is assigned the highest priority and the operator having the least impact on overall performance is assigned the lowest priority. If a plurality of acceleration library operators are needed, depending on the resource availability of the eFPGA, if resources are sufficient, the design containing these operators is integrated to generate a new target file and loaded into the eFPGA. If resources are insufficient, the operators are implemented in descending order of priority, and some high-priority operators are integrated to generate a target file and loaded into the eFPGA.

This embodiment determines the priority of each first operator when multiple first operators are identified in the target model and the eFPGA engine cannot execute each first operator simultaneously. Then, according to the order of priority from high to low, the first operators are filled into the eFPGA engine's resource space for execution. The remaining first operators after the resource space is filled are executed collaboratively by the microprocessor, ASIC circuit, and eFPGA engine. This embodiment not only identifies whether the eFPGA has the ability to accelerate each operator (i.e., whether the corresponding target file exists in the operator acceleration library of eFPGA), but also comprehensively considers the eFPGA engine's computing power resource space. Based on this, considering the impact weight of each first operator on the task processing performance of the network model under limited computing power resources of eFPGA, this embodiment determines the priority of the eFPGA to execute each first operator, so that the overall processing performance of the AI processor on the user-deployed network model is optimal. This enables the AI processor to adapt to different scenarios and AI algorithms, improves its flexibility, and further enhances its adaptability and processing efficiency in response to new AI technologies, models, and operators.

To further aid in understanding the technical concept or principle of the embodiments of the present application, an embodiment two is provided. The workflow diagram of the AI processor in this embodiment is shown in FIG. 6:
1. For the models that users need to deploy, the software compiler parses, integrates, and optimizes the models, including operator fusion and parallel optimization.
2. After parsing the model, the compiler, based on the current engine resources of the AI processor, including the microprocessor, the matrix (tensor) processing engine, vector processing engine and the data transfer and transformation engine in the ASIC circuit, and the circuit acceleration library processing unit of the eFPGA, breaks down the model into micro-units that can be processed by these processing engines.
3. If, after parsing the model, there are new operators that cannot be effectively processed by the current processing engine resources, in order not to affect user deployment, the compiler should first process these operators using one or more of the processing engines, such as the microprocessors, ASIC circuits, and acceleration units of eFPGA circuit acceleration library. This ensures that user deployment requirements are met, while performance can be further optimized later via online upgrades.
4. By printing information, new operators that cannot be effectively processed are sent to the back end. The developers analyze the new operators that cannot be effectively processed, implement the operators using eFPGA, and add the target file of the implemented operators to the eFPGA circuit acceleration library.
5. After the circuit acceleration library of eFPGA is synchronized, the compiler is notified that the processing engine resources of the AI processor can be re-evaluated. eFPGA reloads the appropriate circuits through online download, and the compiler redistributes the tasks processed by each processing engine to optimize performance and improve the competitiveness of the AI processor.

AI processors are used to accelerate the performance of deep learning models, providing powerful computing resources, speeding up deployment, and improving user experience. Current deep learning models mainly include CNN, RNN, and Transformer models. This embodiment uses the Transformer, the basic model of chatGPT, as an example to provide a detailed introduction.

First, the software compiler parses the Transformer basic model and analyzes that deploying this model requires efficient implementation of operators such as MatMul, Scale, Softmax, Layer Normalization, and Concat.

matmul is a matrix multiplication operation that can be efficiently implemented using the matrix (tensor) computation engine in ASIC circuits. Scale operations can be efficiently implemented using the vector computation engine in ASIC circuits. Concat operations can be efficiently implemented using the data transfer and transformation engine in ASIC circuits.

In CNN models, Softmax is typically used in the last layer, and the amount of data required for Softmax computation is relatively small. Using a microprocessor or sending the data to the host CPU via a PCIe interface is not a performance bottleneck. However, in Transformer models, the Softmax operator is used in every layer, and the amount of data required for Softmax computation in each layer is substantial. Using a microprocessor or sending the data to the host CPU via a PCIe interface for processing would severely impact the processing performance of AI processors, thereby affecting their competitiveness. If the eFPGA acceleration library contains a target file implementing Softmax operator acceleration, this target file can be loaded into the eFPGA for acceleration during Softmax operations. If the acceleration library does not yet have a target file for Softmax operator acceleration, the compiler must decompose the Softmax operator and implement it using a microprocessor, host CPU, and dedicated ASIC circuitry to meet the customer's deployment model requirements. Simultaneously, the compiler must inform the backend of the reasons affecting model performance bottlenecks, allowing them to design the target file for accelerating the Softmax operator based on the analysis and synchronize it to the eFPGA acceleration library. This embodiment allows for online loading to update the eFPGA program, and the Softmax operator can be subsequently implemented using the eFPGA, thereby improving system performance and enhancing user experience.

Similarly, if the eFPGA acceleration library contains a target file implementing Layer Normalization operator acceleration, this target file can be loaded into the eFPGA, and the eFPGA will accelerate the Layer Normalization operation. If the acceleration library does not yet contain a target file for Layer Normalization operator acceleration, the compiler must decompose the Layer Normalization operator and implement it using a microprocessor, host CPU, and ASIC dedicated circuitry to meet the customer's deployment model requirements. Simultaneously, the reasons for the performance bottleneck of the model are explained to the backend, allowing them to design a target file for accelerating the Layer Normalization operator based on the analysis and synchronize it to the eFPGA acceleration library. This embodiment allows for online loading to update the eFPGA program, and subsequently, the Layer Normalization operator can be implemented using eFPGA, thereby improving system performance and enhancing user experience.

Name (preferably named after the operator) and number the target files in the acceleration library to facilitate the compiler's subsequent allocation of compilation tasks based on the library's resources. For example, implement coarse-grained operators such as Softmax, LayerNorm, and Sigmoid, or more fine-grained abstractions, and then name and number the target files for these operators respectively.

If a model contains multiple operators that cannot be effectively accelerated by various engines of microprocessors and ASIC circuits, such as the Softmax and Layer Normalization operators in the Transformer model, the two operators can be implemented in eFPGA and then a unified target file can be generated and placed in the acceleration library for use. Alternatively, the eFPGA can be partitioned into different regions to load various different operators.

Of course, the above descriptions are all methods that can be adopted when eFPGA resources are sufficient. If a model has multiple operators that need to be accelerated by eFPGA, and there are not enough resources to place all these operators into the eFPGA, the following methods can be used:
1. Operators are ranked according to their contribution to model acceleration, with the operators that has the greatest impact on overall performance having the highest priority and the operators that has the least impact on overall performance having the lowest priority. Operators are implemented in descending order of priority until the eFPGA resources are fully utilized. These high-priority operators are then integrated to generate target files and loaded into the eFPGA.
2. These operators are analyzed and common characteristics are extracted for acceleration. For example, if multiple operators contain operations such as ex, ln, sqrt, 1/x, trigonometric functions, and inverse trigonometric functions, implementing these operations can accelerate multiple operators.

The above description pertains to the basic Transformer structure. These methods can also be used to accelerate CNNs, RNNs, and subsequent AI technologies, models, and operators, and the mechanism remains effective.

The above are merely a few specific implementation scenarios of the AI processor acceleration method in the embodiments of the present application. They should not be construed as limiting the scope of the present application. Those skilled in the art can understand that all or part of the processes of the above embodiments can be implemented, and equivalent changes made in accordance with the claims of the present application still fall within the scope of the present application.

In other words, the above-described embodiment is only used to help understand the technical concept or technical principle of the embodiments of the present application, and does not constitute a limitation of the present application. Any simple modifications based on this technical concept should be within the scope of the present application.

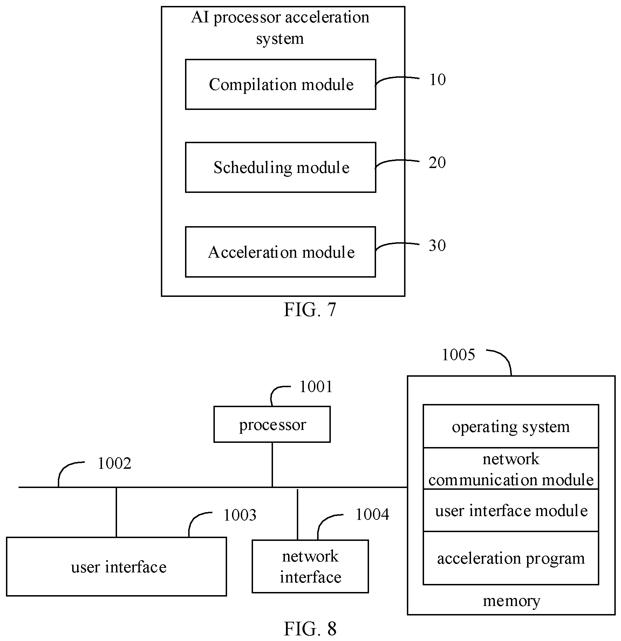

Furthermore, the embodiment of the present application also proposes an AI processor acceleration system. Referring to FIG. 7, FIG. 7 is a functional module schematic diagram of the AI processor acceleration system according to an embodiment of the present application.

In this embodiment, the AI processor acceleration system includes a compilation module 10 and an acceleration module 30.

The compilation module 10 is configured to determine the first operator in the target model that cannot be effectively accelerated after identifying the target model that cannot be effectively accelerated by the AI processor.

The acceleration module 30 is configured to determine the target file corresponding to the first operator and synchronize the target file to the operator acceleration library of the eFPGA of the AI processor, to accelerate the first operator through the eFPGA.

In some embodiments, the AI processor acceleration system further includes a scheduling module 20.

The scheduling module 20 is configured to collaboratively execute the first operator through the microprocessor and ASIC circuit of the AI processor.

In some embodiments, the compilation module 10 is further configured to:
parse the target model through a compiler to obtain a plurality of operators to be accelerated; and
determine, from the plurality of operators to be accelerated, the operators that cannot run effectively on the engine resources of the AI processor, and designate them as the first operators that cannot be effectively accelerated in the target model.

In some embodiments, the compilation module 10 is further configured to:
map each operator to be accelerated to the engine resources for execution based on the engine resources in the AI processor and a preset scheduling algorithm through the compiler;
using the operator to be accelerated that does not include the eFPGA engine in the mapped engine resources as the second operator, and identify whether the second operator can be effectively accelerated by the microprocessor and/or ASIC circuit of the AI processor; and
use the second operator as an operator among the operators to be accelerated that cannot be effectively run on the engine resources of the AI processor when it is identified that the second operator cannot be effectively accelerated.

In some embodiments, the engine resources include the engine of the eFPGA, the microprocessor, and the ASIC circuit, and the compilation module 10 is further configured to:
identify the engine resources in the AI processor through the compiler to determine whether the engine of the ASIC circuit can accelerate each operator to be accelerated;
use the operator to be accelerated that cannot be accelerated by the engine of the ASIC circuit as the third operator, and determine whether the engine of the eFPGA can accelerate the third operator; and
map the third operator that cannot be accelerated by the eFPGA engine to the engines of the microprocessor and the ASIC circuit through a preset scheduling algorithm for collaborative execution.

In some embodiments, the acceleration module 30 is further configured to:
send a notification message to the compiler, where the notification message is used to trigger the compiler to identify and process the engine resources in the AI processor.

In some embodiments, the acceleration module 30 is further configured to:
output the information of the first operator as a prompt;
obtain the acceleration unit execution file corresponding to the first operator input based on the output prompt, where the acceleration unit execution file is executable through the eFPGA; and
use the acceleration unit execution file as the target file corresponding to the first operator.

In some embodiments, the acceleration module 30 is further configured to:
determine the priority of each first operator, if it is found that there are multiple first operators in the target model, and the engine of the eFPGA cannot execute each first operator simultaneously; and
fill each first operator into the resource space of the eFPGA engine for execution according to the order of priority of each first operator from high to low, and execute the remaining first operators, after the resource space is filled, collaboratively through the microprocessor, the ASIC circuit and the eFPGA engine of the AI processor.

The acceleration system for the AI processor provided in this embodiment belongs to the same concept as the AI processor acceleration method provided in the above embodiments. Technical details not described in detail in this embodiment can refer to the embodiments of the AI processor acceleration method above. Furthermore, this embodiment has the same beneficial effects as the various embodiments of the AI processor acceleration method, and will not be repeated here.

The system embodiments described above are merely illustrative. The units described as separate components may or may not be physically separate; that is, they may be located in one place or distributed across multiple network units. Some or all of the modules can be selected to achieve the purpose of this embodiment according to actual needs.

Furthermore, the embodiment of the present application also provides a chip. Referring to FIG. 8, FIG. 8 is a schematic diagram of the hardware structure of a chip according to an embodiment of the present application. As shown in FIG. 8, the chip may include: a processor 1001, a communication bus 1002, a user interface 1003, a network interface 1004, and a memory 1005. The processor 1001 may be a central processing unit (CPU). The communication bus 1002 is used to enable communication between these components. The user interface 1003 may include a display, an input unit such as a keyboard. The user interface 1003 may also include standard wired interfaces and wireless interfaces. The network interface 1004 may include standard wired interfaces and wireless interfaces (such as Wi-Fi). The memory 1005 may be high-speed random access memory (RAM) or stable non-volatile memory (NVM), such as disk storage. The memory 1005 may also be a storage device independent of the aforementioned processor 1001.

Those skilled in the art will understand that the structure shown in FIG. 8 does not constitute a limitation on the chip, and may include more or fewer components than shown, or a combination of certain components, or have different component arrangements. As shown in FIG. 8, the memory 1005, as a storage medium, may include an operating system, a data storage module, a network communication module, a user interface module, and an acceleration program.

In the chip shown in FIG. 8, the network interface 1004 is mainly used for data communication with other devices; the user interface 1003 is mainly used for data interaction with the user; the processor 1001 and the memory 1005 in this embodiment can be provided in the chip. The chip calls the acceleration program stored in the memory 1005 through the processor 1001 and executes the AI processor acceleration method provided in any of the above embodiments.

The device in this embodiment belongs to the same concept as the AI processor acceleration methods in the above embodiments. Technical details not described in detail in this embodiment can refer to any of the above embodiments. Furthermore, this embodiment has the same beneficial effects as the AI processor acceleration method.

Furthermore, the embodiments of the present application also propose a computer-readable storage medium, which can be a non-volatile computer-readable storage medium storing an AI processor acceleration program. When the AI processor acceleration program is executed by the processor, the AI processor acceleration method of the present application as described above is implemented.

The various embodiments of the chip and computer-readable storage medium of the present application can refer to the various embodiments of the AI processor acceleration method of the present application, which will not be repeated here.

In this document, the terms "comprise" "include" or any other variations thereof are intended to encompass non-exclusive inclusion, such that a process, method, article, or system including a series of elements includes not only those elements but also other elements not explicitly listed, or elements inherent to such process, method, article, or system. In the absence of further limitations, an element defined by the phrase "includes a ..." does not exclude the presence of other identical elements in the process, method, article, or system including the element.

The serial numbers of the embodiments in the present application are for descriptive purposes only and does not indicate the superiority or inferiority of the embodiments.

Through the description of the above embodiments, those skilled in the art can clearly understand that the above-mentioned embodiment methods can be implemented by means of software plus the necessary general hardware platform, and of course can also be implemented by hardware, but in many cases the former is better. Based on this understanding, the technical solution of the present application is essentially, or the part that contributes to some technologies, can be embodied in the form of a software product. This computer software product is stored in a computer-readable storage medium (such as ROM/RAM, magnetic disk, optical disk) as described above, and includes several instructions to cause a communication device to execute the methods described in each embodiment of the present application.

The above are some embodiments of the present application and do not limit the scope of the present application. Any equivalent structure or equivalent process transformation made using the contents of the specification and drawings of the present application, or directly or indirectly applied in other related technical fields, are also included in the scope of the present application.

## Claims

1. An artificial intelligence (AI) processor acceleration method, comprising:
after identifying a target model that cannot be effectively accelerated by the AI processor, determining a first operator in the target model that cannot be effectively accelerated; and
determining a target file corresponding to the first operator, and synchronizing the target file to an operator acceleration library of an eFPGA of the AI processor, to accelerate the first operator through the eFPGA.

2. The AI processor acceleration method according to claim 1, wherein, after the determining the first operator in the target model that cannot be effectively accelerated, the method further comprises:
executing, via a microprocessor and an ASIC circuit of the AI processor, the first operator collaboratively.

3. The AI processor acceleration method according to claim 1, wherein the determining the first operator in the target model that cannot be effectively accelerated comprises:
parsing, via a compiler, the target model to obtain a plurality of operators to be accelerated;
and
determining, from the plurality of operators to be accelerated, an operator that cannot run effectively on engine resources of the AI processor to be the first operator that cannot be effectively accelerated in the target model.

4. The AI processor acceleration method according to claim 3, wherein, after the parsing, via the compiler, the target model to obtain the plurality of operators to be accelerated, the method further comprises:
mapping, via the compiler, each of the plurality of operators to be accelerated to the engine resources in the AI processor for execution based on the engine resources and a preset scheduling algorithm;
using an operator to be accelerated that does not include eFPGA engine in mapped engine resources as a second operator, and identifying whether the second operator can be effectively accelerated by the microprocessor and/or the ASIC circuit of the AI processor; and
in response to identifying that the second operator cannot be effectively accelerated, using the second operator as an operator among the plurality of operators to be accelerated that cannot be effectively run on the engine resources of the AI processor.

5. The AI processor acceleration method according to claim 4, wherein the engine resources comprise engines of the eFPGA, the microprocessor, and the ASIC circuit, and the mapping, via the compiler, each of the plurality of operators to be accelerated to the engine resources in the AI processor for execution based on the engine resources and the preset scheduling algorithm comprises:
identifying and processing, via the compiler, the engine resources in the AI processor to determine whether the engine of the ASIC circuit is capable of accelerating each of the plurality of operators to be accelerated;
using, an operator to be accelerated that cannot be accelerated by the engine of the ASIC circuit as a third operator, and determining whether the engine of the eFPGA is capable of accelerating the third operator; and
mapping the third operator that cannot be accelerated by the engine of the eFPGA to the engines of the microprocessor and the ASIC circuit through the preset scheduling algorithm for collaborative execution.

6. The AI processor acceleration method according to claim 5, wherein, after the synchronizing the target file to the operator acceleration library of the eFPGA of the AI processor, the method further comprises:
sending a notification message to the compiler, wherein the notification message is configured to trigger the compiler to identify and process the engine resources in the AI processor.

7. The AI processor acceleration method according to claim 1, wherein the determining the target file corresponding to the first operator comprises:
outputting information of the first operator as a prompt;
obtaining an acceleration unit execution file corresponding to the first operator input based on an output prompt, wherein the acceleration unit execution file is executable through the eFPGA; and
using the acceleration unit execution file as the target file corresponding to the first operator.

8. The AI processor acceleration method according to claim 1, further comprising:
in response to identifying that there are a plurality of first operators in the target model and the engine of the eFPGA cannot execute each of the plurality of first operator simultaneously, determining a priority of each first operator; and
filling each first operator into a resource space of the eFPGA engine for execution according to an order of the priority of each first operator from high to low, and executing, via the microprocessor, the ASIC circuit and the eFPGA engine of the AI processor, remaining first operators after the resource space is filled collaboratively.

9. The AI processor acceleration method according to claim 8, wherein the determining the priority of each of the plurality of first operators comprises:
identifying impact weights of each of the plurality of first operators on task processing performance of a network model; and
determining the priority of each of the plurality of first operators based on the impact weights, wherein the greater the impact weight on the task processing performance, the higher the priority.

10. The AI processor acceleration method according to any one of claims 1 to 9, further comprising:
after identifying a network model that can be effectively accelerated by the AI processor, executing, via the microprocessor, ASIC circuit, and the eFPGA of the AI processor, all operators of the network model collaboratively.

11. An AI processor acceleration system, comprising:
a compilation module, configured to identify a first operator in a target model that cannot be effectively accelerated after identifying the target model that cannot be effectively accelerated by an AI processor; and
an acceleration module, configured to determine a target file corresponding to the first operator and synchronize the target file to an operator acceleration library of an eFPGA of the AI processor, to accelerate the first operator through the eFPGA.

12. A chip, comprising:
a memory;
a processor; and
an acceleration program stored in the memory and executable on the processor, wherein the acceleration program is executed by the processor, the acceleration method according to any one of claims 1 to 10 is implemented.
